# EUROPÄISCHE PATENTSCHRIFT

(11) **EP 3 732 373 B1**
(45) Veröffentlichungstag und Bekanntmachung des Hinweises auf die Patenterteilung: **25.01.2023**
(21) Anmeldenummer: 18842519.3
(22) Anmeldetag: 13.12.2018
(51) Int. Cl.: F03D 80/80, H02G 5/06

(54) **STROMSCHIENENGEHÄUSE FÜR EINE WINDKRAFTANLAGE**
BUSBAR HOUSING FOR A WIND TURBINE
BOÎTIER DE BARRE-BUS POUR UN AÉROGÉNÉRATEUR

(30) Priorität: 29.12.2017 DE 202017107951 U
(43) Veröffentlichungstag der Anmeldung: 04.11.2020
(73) Patentinhaber: Flyteg GmbH & Co. Kg, 24568 Kaltenkirchen (DE)
(72) Erfinder: WIECHERS, Jörg, 25485 Bilsen (DE)
(74) Vertreter: Patent- und Rechtsanwälte Behrmann Wagner PartG mbB
(86) Internationale Anmeldenummer: PCT/EP2018/084671
(87) Internationale Veröffentlichungsnummer: WO 2019/129495

(56) Entgegenhaltungen:
- DE-A1-102012 105 669
- DE-U1-202016 100 692

## Beschreibung

### Stand der Technik

Die Erfindung betrifft ein Stromschienengehäuse für eine Windkraftanlage mit den Merkmalen des Anspruchs 1.

Ein Stromschienengehäuse für eine Windkraftanlage ist aus der DE 10 2012 105 669 A1 des Anmelders bekannt. Das bekannte Stromschienengehäuse dient der Umhüllung bzw. dem Schutz von innerhalb des Stromschienengehäuses angeordneten Stromschienen, die im Bereich zwischen einem Generator im Gondelbereich der Windkraftanlage und dem Sockelbereich der Windkraftanlage innerhalb des Turms angeordnet sind. Das bekannte Stromschienengehäuse wird typischerweise entweder bereits bei der Fertigung von einzelnen Turmsegmente an den Turmsegmenten montiert, oder aber nachträglich an der Baustelle bzw. dem Aufstellort der Windkraftanlage. Die aus Stahlblechteilen bestehenden Gehäuseelemente des Stromschienengehäuses sind über Verbindungseinheiten in Längsrichtung miteinander verbunden. Die Verbindungseinheiten dienen insbesondere dazu, die innerhalb der Gehäuseelemente des Stromschienengehäuses angeordneten Stromschienen elektrisch leitend miteinander zu verbinden. Die innerhalb der Windkraftanlage ausgebildete Stromführung besteht somit aus einer Vielzahl von in abwechselnder Reihenfolge miteinander verbundenen Gehäuseelementen und Verbindungseinheiten. Die Seitenwände an den Gehäuseelementen sowie die entsprechenden Bereiche des Verbindungsgehäuses der Verbindungseinheit überlappen an den stirnseitigen Endbereichen der Gehäuseelemente in axialer Richtung etwas und sind im Überlappungsbereich mittels Schraubverbindungen miteinander verbunden. Hierzu ist es üblich, das Gehäuseelement mit entsprechenden Gewindebohrungen in der Seitenwand zu versehen. Je nach Materialdicke bzw. Stärke der Seitenwand ist ein derartiges Gewinde jedoch relativ anfällig gegenüber mechanischen Beschädigungen, die während der Montage der relativ schweren, mit den Stromschienen versehenen Gehäuseelemente auftreten können. Daher ist es aus der oben genannten DE 10 2012 105 669 A1 bereits bekannt, bei einem beschädigten oder auf sonstige Weise nicht verwendbaren Gewinde an einem Gehäuseelement durch Anordnung eines Reparaturblechs das beschädigte Gewinde zu ersetzen. Zur Fixierung bzw. Befestigung des Reparaturblechs ist es weiterhin vorgesehen, dieses mittels Klebstoff und Schraubverbindungen mit dem betreffenden Gehäuseelement zu verbinden.

Weiterhin ist es bekannt, anstelle von Gewindebohrungen in der Seitenwand eines Gehäuseelements Durchgangsbohrungen vorzusehen, und im Bereich der Durchgangsbohrungen Gewindemuttern durch Schweißen mit den Seitenwänden der Gehäuseelemente zu verbinden. Die positionsgenaue Anordnung der Gewindemuttern sowie das einzelne Verschweißen der Gewindemuttern mit den Seitenwänden erfordert jedoch einen relativ großen Aufwand.

Aus dem DE 20 2016 100 692 U1 des Anmelders ist ein Stromschienengehäuse für eine Windkraftanlage mit den Merkmalen des Oberbegriffs des Anspruchs 1 bekannt. Das bekannte Stromschienengehäuse unterscheidet sich von den oben genannten konstruktiven Ausführungen dadurch, dass die Gewinde für die Schraubverbindungen nicht mehr durch separate Bauteile ausgebildet werden müssen, sondern durch einen spanlosen Umformprozess im Bereich der verwendeten Verstärkungsbleche erzeugt werden.

### Offenbarung der Erfindung

Das erfindungsgemäße Stromschienengehäuse für eine Windkraftanlage mit den Merkmalen des Anspruchs 1 hat den Vorteil, dass es eine besonders kompakte Ausbildung des Verstärkungsblechs ermöglicht. Dies wird erfindungsgemäß dadurch erzielt, dass das Verstärkungsblech streifenförmig ausgebildet ist, wobei sich die Längsseite des Verstärkungsblechs parallel zur Stirnseite des Gehäuseelements erstreckt, und wobei das Verstärkungsblech zumindest näherungsweise mit der Stirnseite des Gehäuseelements bündig abschließt.

Vorteilhafte Weiterbildungen des erfindungsgemäßen Stromschienengehäuses für eine Windkraftanlage sind in den Unteransprüchen aufgeführt.

Um eine gleichmäßige Einleitung von Kräften zwischen den Verstärkungsblechen und den Gehäuseelementen zu ermöglichen, wobei die Kräfte sich auf möglichst viele Verbindungsstellen aufteilen sollen, ist es vorgesehen, dass an dem Verstärkungsblech mehrere, vorzugsweise in etwa gleichmäßigen Abständen zueinander angeordnete Gewindeabschnitte ausgebildet sind.

Eine besonders vorteilhafte Montage sowie geschützte Anordnung der Verstärkungsbleche sieht vor, dass das Verbindungsgehäuse der Verbindungseinheit das Gehäuseelement im Überlappungsbereich von außen her umfasst, und dass das Verstärkungsblech auf der dem Verbindungsgehäuse abgewandten Seite der Seitenwand des Gehäuseelements angeordnet ist. Eine derartige Ausgestaltung ermöglicht es auch, dass in dem Verbindungsgehäuse ebenfalls lediglich Durchgangsbohrungen ausgebildet werden müssen, da der Kopf der Befestigungsschraube dann auf der Außenseite, d.h. auf der dem Gehäuseelement abgewandten Seite des Verbindungsgehäuses im Bereich der Durchgangsbohrung angeordnet ist.

Um eine möglichst einfache Montage des Verstärkungsblechs bei gleichzeitig guter Positionierung der Gewindeabschnitte zum Gehäuseelement zu ermöglichen, ist es vorgesehen, dass die Durchgangslöcher in der Seitenwand einen Durchmesser aufweisen, der etwas größer ist als der in das Durchgangsloch hineinragende Außendurchmesser des Gewindeabschnitts. In der Praxis hat es sich dabei als vorteilhaft erwiesen, wenn der Durchmesser des Durchgangslochs in der Seitenwand des Gehäuseelements beispielsweise etwa einen halben Millimeter größer ist als der Außendurchmesser des Gewindeabschnitts.

Durch die Gewindeabschnitte des Verstärkungsblechs, die in die Durchgangslöcher der Seitenwand des Gehäuseelements axial hineinragen, wird zwar eine genaue Positionierung des Verstärkungsblechs zur Seitenwand des Gehäuseelements ermöglicht, jedoch besteht die Gefahr, dass das Verstärkungsblech nicht an der Seitenwand des Gehäuseelements hält. Daher ist es vorgesehen, dass die Verbindung zwischen dem Verstärkungsblech und der Seitenwand des Gehäuseelements durch eine Klebeverbindung ausgebildet ist. Die Klebeverbindung muss lediglich sicherstellen, dass bis zur Montage der ersten Befestigungsschraube beim Verbinden des Gehäuseelements mit dem Verbindungsgehäuse das Verstärkungsblech an der Seitenwand des Gehäuseelements hält bzw. eine Montage der entsprechenden Befestigungsschraube ermöglicht wird.

Alternativ kann es auch vorgesehen sein, dass die Verbindung zwischen dem Verstärkungsblech und der Seitenwand des Gehäuseelements durch eine Schweiß- oder Nietverbindung ausgebildet ist.

Zur Versteifung der Seitenwände des Gehäuseelements, insbesondere bei relativ geringen Blechstärken, ist es bereits bekannt, dass das Gehäuseelement in Längsrichtung verlaufende sickenförmige Verformungen oder ähnliches aufweist. Diese sickenförmigen Verformungen sind auch im Bereich des Verstärkungsblechs ausgebildet. Um in diesem Bereich eine möglichst vollflächige Anlage des Verstärkungsblechs an der Seitenwand des Gehäuseelements zu ermöglichen, sieht es eine weitere bevorzugte konstruktive Ausgestaltung vor, dass die Seitenwand des Gehäuseelements in Richtung zum Verstärkungsblech ragende Sicken aufweist, und dass das Verstärkungsblech im Bereich der Sicken gegengleich verformt ist, sodass das Verstärkungsblech über seine gesamte Erstreckung zumindest im Wesentlichen vollständig an der Seitenwand des Gehäuseelements anliegt.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen stark vereinfachten Längsschnitt durch eine Windkraftanlage,
- Fig. 2: einen Verbindungsbereich zweier Gehäuseelemente eines Stromschienengehäuses unter Verwendung einer Verbindungseinheit in einer Vorderansicht,
- Fig. 3: eine Ansicht in Richtung III - III der Fig. 2 und
- Fig. 4: einen Schnitt im Verbindungsbereich zwischen einem Gehäuseelement und einem Verbindungsgehäuse unter Verwendung eines Verstärkungsblechs.

Gleiche Elemente bzw. Elemente mit gleicher Funktion sind in den Figuren mit den gleichen Bezugsziffern versehen.

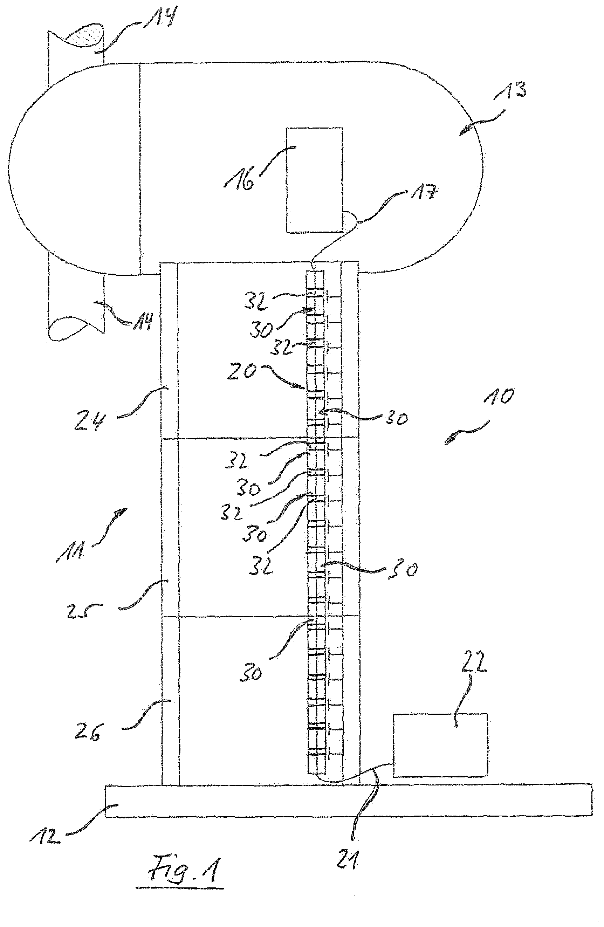

In der Fig. 1 ist der grundsätzliche Aufbau einer Windkraftanlage 10 stark vereinfacht dargestellt. Die Windkraftanlage 10 weist einen Turm 11 auf, der auf einem Sockel 12 angeordnet ist. An der Spitze des Turms 11 ist eine Gondel 13 angeordnet, in der u.a. die Rotorblätter 14 der Windkraftanlage 10 drehbeweglich gelagert sind. Innerhalb der Gondel 13 befindet sich ein Generator 16. Der Generator 16 ist mit oberen Verbindungsleitungen 17 mit einem oberen Anschluss mit einem in der Fig. 1 lediglich stark vereinfacht dargestelltes Stromschienengehäuse 20 gekoppelt. Das Stromschienengehäuse 20 verläuft über die gesamte Länge bzw. Höhe des Turms 11. Im Bereich des Sockels 12 des Turms 11 ist das Stromschienengehäuse 20 mittels weiteren, unteren Verbindungsleitungen 21 bzw. einer unteren Verbindung mit einer Netzstation 22 verbunden.

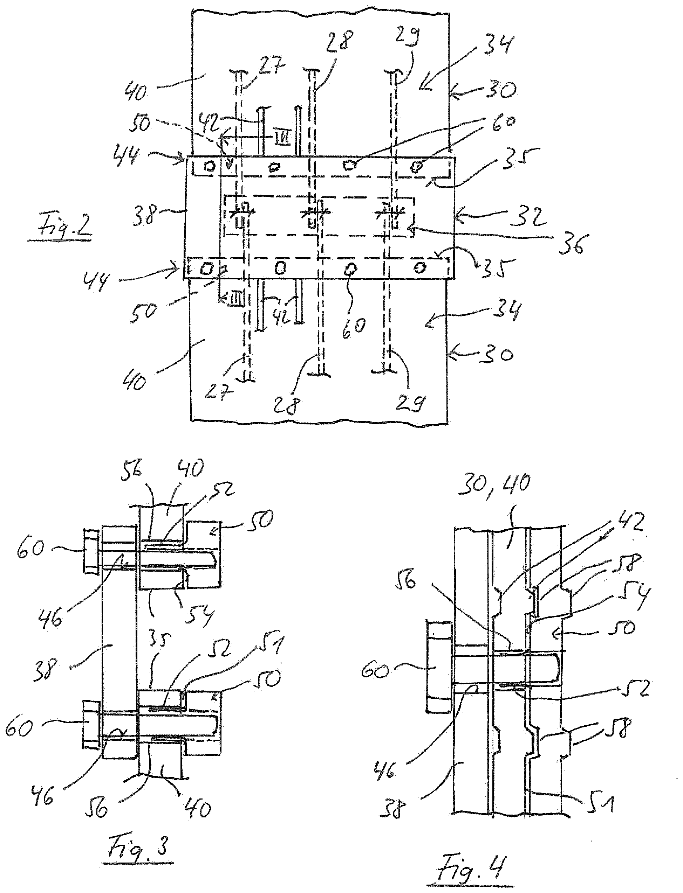

Der Turm 11 besteht beispielhaft aus drei übereinander angeordneten, jeweils hülsenförmigen Turmsegmenten 24 bis 26. Ein derartiges Turmsegment 24 bis 26 weist beispielsweise eine typische Länge von etwa 20m auf, sodass die Gesamthöhe des Turms 11 (ohne die Gondel 13) in etwa 60m beträgt. Innerhalb des Stromschienengehäuses 20 verlaufen eine Vielzahl von in der Fig. 2 erkennbaren, insbesondere in Form von länglich ausgebildeten Stromschienen 27 bis 29, die insbesondere aus Aluminium bestehen, und die jeweils eine Phase einer Drehstromleitung ausbilden.

Das Stromschienengehäuse 20 besteht in Längsrichtung betrachtet jeweils abwechselnd aus tubusförmigen Gehäuseelementen 30, die mittels jeweils einer Verbindungseinheit 32 miteinander verbunden sind. Das aus Stahl bestehende, insbesondere aus mehreren Blechbauteilen gebildete Gehäuseelement 30 nimmt in seinem Innenraum 34 die Stromschienen 27 bis 29 auf. Die aus der jeweiligen Stirnseite 35 eines Gehäuseelements 30 herausragenden Endabschnitte der Stromschienen 27 bis 29 sind mittels eines in der Verbindungseinheit 32 angeordneten Verbindungsblocks 36, der in der Fig. 2 lediglich stark vereinfacht dargestellt ist, mechanisch und elektrisch leitend miteinander verbunden.

Die Verbindungseinheit 32 weist ein Verbindungsgehäuse 38 zur Aufnahme des Verbindungsblocks 36 auf, das insbesondere wie die Gehäuseelemente 30 ebenfalls aus Stahl besteht, mehrteilig ausgebildet ist und aus (ebenen) Blechbauteilen besteht.

Aus der Darstellung der Fig. 2 und 4 ist darüber hinaus erkennbar, dass im Bereich von Seitenwänden 40 eines Gehäuseelements 30 in Längsrichtung verlaufende Verformungen in Form von Sicken 42 angeordnet sein können, die über die gesamte Längserstreckung eines Gehäuseelements 30 verlaufen, und die der Versteifung des Gehäuseelements 30 dienen.

Die Erfindung befasst sich mit der Verbindung des Gehäuseelements 30 mittels der Verbindungseinheit 32. Hierzu ist es vorgesehen, dass das Verbindungsgehäuse 38 in axialer Richtung betrachtet den jeweiligen Endbereich eines ihr zugewandten Gehäuseelements 30 in einem Überlappungsbereich 44 von außen her umfasst. Weiterhin sind in dem Verbindungsgehäuse 38 beispielhaft an den jeweiligen Endbereichen jeweils vier Durchgangslöcher 46 ausgebildet. An dem eine typische Wandstärke von etwa 2mm aufweisenden Seitenwänden 40 eines Gehäuseelements 30 sind auf der dem Verbindungsgehäuse 38 abgewandten Seite parallel zur Zeichenebene der Fig. 1 jeweils zwei Verstärkungsbleche 50 befestigt. Die Verbindung zwischen einem Verstärkungsblech 50 und der zugewandten Seitenwand 40 des Gehäuseelements 30 erfolgt bevorzugt durch eine im Detail nicht dargestellte Klebeverbindung 51. Alternativ sind jedoch auch Schweiß- oder Nietverbindungen denkbar. Das aus Blech bzw. Stahl bestehende Verstärkungsblech 50 mit einer beispielhaften Dicke von 3mm erstreckt sich zumindest im Wesentlichen über die gesamte Breite der Seitenwand 40.

Anhand der Fig. 3 ist weiterhin erkennbar, dass das Verstärkungsblech 50 streifenförmig ausgebildet ist, wobei sich die Längsseite des Verstärkungsblechs 50 parallel zur Stirnseite 35 des Gehäuseelements 30 erstreckt, und dass das Verstärkungsblech 50 zumindest näherungsweise mit der Stirnseite 35 des Gehäuseelements 30 bündig abschließt

Das Verstärkungsblech 50 weist in Überdeckung mit den Durchgangslöchern 46 in dem Verbindungsgehäuse 38 angeordnete Gewindeabschnitte 52 auf. Die Gewindeabschnitte 52 sind durch einen spanlosen Umformvorgang (Rollieren) aus dem Material des Verstärkungsblechs 50 ausgebildet und ragen auf der der Seitenwand 40 zugewandten Seite domartig über die Oberfläche 54 des Verstärkungsblechs 50 hinaus. Weiterhin sind im Bereich der Seitenwand 40 weitere Durchgangsbohrungen 56 in Überdeckung mit den Gewindeabschnitten 52 vorgesehen bzw. ausgebildet, wobei der Durchmesser der weiteren Durchgangsbohrungen 56 bevorzugt lediglich etwas größer, beispielsweise 0,5mm größer, als der Außendurchmesser der Gewindeabschnitte 52 ist. Die über die Oberfläche des Verstärkungsblechs 50 herausragenden Gewindeabschnitte 52 ragen somit mit relativ geringem radialen Spiel axial in die weiteren Durchgangsbohrungen 56 hinein, wobei die axiale Länge der Gewindeabschnitte 52 derartig ist, dass sie auf der dem Verstärkungsblech 50 abgewandten Seite der Seitenwand 40 nicht aus diesen herausragen. Mit anderen Worten gesagt bedeutet dies, dass die axiale Länge der Gewindeabschnitte 52 höchstens der Blechdicke der Seitenwand 40 entspricht. Weiterhin kann es vorgesehen sein, dass das Verstärkungsblech 50, wie aus der Fig. 4 erkennbar ist, im Bereich der Sicken 42 gegengleiche Verformungen 56 aufweist, die insbesondere mit einem spanlosen Umformvorgang erzeugt werden. Anhand der Fig. 4 ist darüber hinaus erkennbar, wie Befestigungsschrauben 60 von der Außenseite des Verbindungsgehäuses 38 her die Durchgangslöcher 46 des Verbindungsgehäuses 38 durchdringen und in Wirkverbindung mit den Gewindeabschnitten 52 des Verstärkungsblechs 50 sind.

### Bezugszeichen

- 10: Windkraftanlage
- 11: Turm
- 12: Sockel
- 13: Gondel
- 14: Rotorblatt
- 16: Generator
- 17: Verbindungsleitung
- 20: Stromschienengehäuse
- 21: Verbindungsleitung
- 22: Netzstation
- 24: Turmsegment
- 25: Turmsegment
- 26: Turmsegment
- 27: Stromschiene
- 28: Stromschiene
- 29: Stromschiene
- 30: Gehäuseelement
- 32: Verbindungseinheit
- 34: Innenraum
- 35: Stirnseite
- 36: Verbindungsblock
- 38: Verbindungsgehäuse
- 40: Seitenwand
- 42: Sicke
- 44: Überlappungsbereich
- 46: Durchgangsloch
- 50: Verstärkungsblech
- 51: Klebeverbindung
- 52: Gewindeabschnitt
- 54: Oberfläche
- 56: Durchgangsbohrung
- 58: Verformung
- 60: Befestigungsschraube

## Patentansprüche

1. Stromschienengehäuse (20) für eine Windkraftanlage (10), mit aus Metall bestehenden, tubusförmigen Gehäuseelementen (30), wobei die Gehäuseelemente (30) Seitenwände (40) aufweisen, die einen Innenraum (34) zur Aufnahme von Stromschienen (27 bis 29) ausbilden, mit Verbindungseinheiten (32), die die Gehäuseelemente (30) in Längsrichtung an stirnseitigen Endbereichen miteinander verbinden, wobei jede der Verbindungseinheiten (32) ein Verbindungsgehäuse (38) mit einem in dem Verbindungsgehäuse (38) angeordneten Verbindungsblock (36) für die Stromschienen (27 bis 29) aufweist, wobei das Verbindungsgehäuse (38) mit den Gehäuseelementen (30) in Längsrichtung betrachtet bereichsweise überlappt, wobei die Gehäuseelemente (30) und das Verbindungsgehäuse (38) im jeweiligen Überlappungsbereich (44) mittels Schraubverbindungen (60) miteinander verbunden sind, wobei zur Ausbildung der Schraubverbindungen (60) die Gehäuseelemente (30) im Überlappungsbereich angeordnete und mit den Seitenwänden (40) der Gehäuseelemente (30) verbundene Verstärkungsbleche (50) aufweisen, wobei die Verstärkungsbleche (50) Gewindeabschnitte (52) aufweisen, die durch einen spanlosen Umformprozess aus dem Material des Verstärkungsblechs (50) gebildet sind, und wobei die Gewindeabschnitte (52) auf der der Seitenwand (40) zugewandten Seite über die Oberfläche (54) des Verstärkungsblechs (50) ragen und in Durchgangslöcher (56) axial hineinragen, die in der Seitenwand (40) ausgebildet sind,
wobei das Verstärkungsblech (50) streifenförmig ausgebildet ist, **dadurch gekennzeichnet, dass** sich die Längsseite des Verstärkungsblechs (50) parallel zur Stirnseite (35) des Gehäuseelements (30) erstreckt, und dass das Verstärkungsblech (50) zumindest näherungsweise mit der Stirnseite (35) des Gehäuseelements (30) bündig abschließt.

2. Stromschienengehäuse nach Anspruch 1,
**dadurch gekennzeichnet,**
**dass** an dem Verstärkungsblech (50) mehrere, vorzugsweise in gleichmäßigen Abständen zueinander angeordnete Gewindeabschnitte (52) vorgesehen sind.

3. Stromschienengehäuse nach Anspruch 1 oder 2,
**dadurch gekennzeichnet,**
**dass** das Verbindungsgehäuse (38) der Verbindungseinheit (32) das Gehäuseelement (30) im Überlappungsbereich (44) von außen her umfasst, und dass das Verstärkungsblech (50) auf der dem Verbindungsgehäuse (38) abgewandten Seite der Seitenwand (40) des Gehäuseelements (30) angeordnet ist.

4. Stromschienengehäuse nach einem der Ansprüche 1 bis 3,
**dadurch gekennzeichnet,**
**dass** die Durchgangslöcher (56) in der Seitenwand (40) einen Durchmesser aufweisen, der etwas größer ist als der in das Durchgangsloch (56) hineinragende Außendurchmesser des Gewindeabschnitts (52).

5. Stromschienengehäuse nach einem der Ansprüche 1 bis 4,
**dadurch gekennzeichnet,**
**dass** die Verbindung zwischen dem Verstärkungsblech (50) und der Seitenwand (40) des Gehäuseelements (30) durch eine Klebeverbindung (51) ausgebildet ist.

6. Stromschienengehäuse nach einem der Ansprüche 1 bis 4,
**dadurch gekennzeichnet,**
**dass** die Verbindung zwischen dem Verstärkungsblech (50) und der Seitenwand (40) des Gehäuseelements (30) durch eine Schweiß- oder Nietverbindung ausgebildet ist.

7. Stromschienengehäuse nach einem der Ansprüche 1 bis 6,
**dadurch gekennzeichnet,**
**dass** die Seitenwand (40) in Richtung zum Verstärkungsblech (50) ragende Sicken (42) aufweist, und dass das Verstärkungsblech (50) im Bereich der Sicken (42) gegengleich verformt ist, sodass dass Verstärkungsblech (50) zumindest im Wesentlichen vollständig an der Seitenwand (40) anliegt.

8. Stromschienengehäuse nach einem der Ansprüche 1 bis 7,
**dadurch gekennzeichnet,**
**dass** die Gehäuseelemente (30), das Verbindungsgehäuse (38) und das Verstärkungsblech (50) als Blechbauteile ausgebildet sind und aus Stahl bestehen.

9. Stromschienengehäuse nach einem der Ansprüche 1 bis 8,
**dadurch gekennzeichnet,**
**dass** die Gewindeabschnitte (52) durch Rollieren gebildet sind, und dass die über die Oberfläche (54) des Verstärkungsblechs (50) ragenden Gewindeabschnitte (52) eine Höhe aufweisen, die höchstens der Höhe der Durchgangslöcher (56) in der Seitenwand (40) bzw. der Blechdicke der Seitenwand (40) entspricht.

## Claims

1. A bus bar housing (20) for a wind turbine (10), the bus bar housing (20) comprising: tubular housing elements (30) made of metal, the housing elements (30) having side walls (40) forming an internal space (34) for accommodating bus bars (27 to 29); connecting units (32) connecting the housing elements (30) to each other at face-side end portions in the longitudinal direction, each of the connecting units (32) having a connecting housing (38) with a connecting block (36) for the bus bars (27 to 29), the connecting block (36) being disposed in the connecting housing (38), the connecting housing (38) partially overlapping with the housing elements (30) in the longitudinal direction, the housing elements (30) and the connecting housing (38) being connected to each other by screw connections (60) in the respective overlap areas (44), the housing elements (30) having reinforcement plates (50) disposed in the overlap area and connected to the side walls (40) of the housing elements (30) for forming the screw connections (60), the reinforcement plates (50) having threaded portions (52) formed from the material of the reinforcement plate (50) by a chipless forming process, and the threaded portions (52) protruding over the surface (54) of the reinforcement plate (50) on the side that faces the side wall (40) and axially protruding into through holes (56) formed in the side wall (40), the reinforcement plate (50) being strip-shaped,
**characterized in that**
the longitudinal side of the reinforcement plate (50) extends parallel to the face side (35) of the housing element (30) and that the reinforcement plate (50) is at least approximately flush with the face side (35) of the housing element (30).

2. The bus bar housing according to claim 1,
**characterized in that**
multiple threaded portions (52), which are preferably disposed at regular intervals, are provided on the reinforcement plate (50).

3. The bus bar housing according to claim 1 or 2,
**characterized in that**
the connecting housing (38) of the connecting unit (32) externally surrounds the housing element (30) in the overlap area (44) and that the reinforcement plate (50) is disposed on the side of the side wall (40) of the housing element (30) that faces away from the connecting housing (38).

4. The bus bar housing according to any one of claims 1 to 3,
**characterized in that**
the through holes (56) in the side wall (40) have a diameter that is slightly larger than the external diameter of the threaded portion (52) protruding into the through hole (56).

5. The bus bar housing according to any one of claims 1 to 4,
**characterized in that**
the connection between the reinforcement plate (50) and the side wall (40) of the housing element (30) is formed by a glued connection (51).

6. The bus bar housing according to any one of claims 1 to 4,
**characterized in that**
the connection between the reinforcement plate (50) and the side wall (40) of the housing element (30) is formed by a welded or bolted connection.

7. The bus bar housing according to any one of claims 1 to 6,
**characterized in that**
the side wall (40) has corrugations (42) protruding in the direction of the reinforcement plate (50) and that the reinforcement plate (50) is formed in a form-fitting manner in the area of the corrugations (42) with the result that the reinforcement plate (50) is in at least essentially full contact with the side wall (40).

8. The bus bar housing according to any one of claims 1 to 7,
**characterized in that**
the housing elements (30), the connecting housing (38) and the reinforcement plate (50) are sheet metal parts and made of steel.

9. The bus bar housing according to any one of claims 1 to 8,
**characterized in that**
the threaded portions (52) are formed by roller burnishing and that the threaded portions (52) protruding over the surface (54) of the reinforcement plate (50) have a height no greater than the height of the through holes (56) in the side wall (40), i.e., the plate thickness of the side wall (40).

## Revendications

1. Boîtier de barre-bus (20) pour un aérogénérateur (10), le boîtier de barre-bus (20) comprenant: des éléments de boîtier (30) tubulaires en métal, les éléments de boîtier (30) ayant des parois latérales (40) formant un espace intérieur (34) pour loger des barres-bus (27 à 29); des unités de liaison (32) reliant les éléments de boîtier (30) à des parties d'extrémité frontales dans la direction longitudinale, chacune des unités de liaison (32) ayant un boîtier de liaison (38) avec un bloc de liaison (36) pour les barres-bus (27 à 29), le bloc de liaison (36) étant disposé dans le boîtier de liaison (38), le boîtier de liaison (38) et les éléments de boîtier (30) se chevauchement partiellement dans la direction longitudinale, les éléments de boîtier (30) et le boîtier de liaison (38) étant reliés par des raccords vissés (60) dans les zones de chevauchement (44) respectives, les éléments de boîtier (30) ayant de tôles de renforcement (50) disposées dans la zone de chevauchement et reliées aux parois latérales (40) des éléments de boîtier (30) pour former les raccords vissés (60), les tôles de renforcement (50) ayant des parties filetées (52) formées du matériau de la tôle de renforcement (50) par un processus de formage sans enlèvement de copeaux et les parties filetées (52) faisant saillie sur la surface (54) de la tôle de renforcement (50) du côté qui est tourné vers la paroi latérale (40) et faisant saillie axiale dans des trous de passage (56) formés dans la paroi latérale (40), la tôle de renforcement (50) étant en forme de bande,
**caractérisé en ce que**
le côté longitudinal de la tôle de renforcement (50) s'étend parallèlement au côté frontal (35) de l'élément de boîtier (30) et que la tôle de renforcement (50) forme une surface au moins approximativement plane avec le côté frontal (35) de l'élément de boîtier (30).

2. Boîtier de barre-bus selon la revendication 1,
**caractérisé en ce que**
plusieurs parties filetées (52), qui sont de préférence disposées à intervalles réguliers, sont disposées sur la tôle de renforcement (50).

3. Boîtier de barre-bus selon la revendication 1 ou 2,
**caractérisé en ce que**
le boîtier de liaison (38) de l'unité de liaison (32) entoure l'extérieur de l'élément de boîtier (30) dans la zone de chevauchement (44) et que la tôle de renforcement (50) est disposée sur le côté de la paroi latérale (40) de l'élément de boîtier (30) qui est détourné du boîtier de liaison (38).

4. Boîtier de barre-bus selon l'une quelconque des revendications 1 à 3, **caractérisé en ce que**
les trous de passage (56) dans la paroi latérale (40) ont un diamètre qui est un peu plus grand que le diamètre extérieur de la partie filetée (52) faisant saillie dans le trou de passage (56).

5. Boîtier de barre-bus selon l'une quelconque des revendications 1 à 4, **caractérisé en ce que**
la liaison entre la tôle de renforcement (50) et la paroi latérale (40) de l'élément de boîtier (30) est formée par un joint adhésif (51).

6. Boîtier de barre-bus selon l'une quelconque des revendications 1 à 4, **caractérisé en ce que**
la liaison entre la tôle de renforcement (50) et la paroi latérale (40) de l'élément de boîtier (30) est formée par un joint soudé ou riveté.

7. Boîtier de barre-bus selon l'une quelconque des revendications 1 à 6, **caractérisé en ce que**
la paroi latérale (40) a des nervures (42) faisant saillie dans la direction de la tôle de renforcement (50) et que la tôle de renforcement (50) est formée par liaison de forme dans la zone des nervures (42) de sorte que la tôle de renforcement (50) est en contact au moins essentiellement total avec la paroi latérale (40).

8. Boîtier de barre-bus selon l'une quelconque des revendications 1 à 7, **caractérisé en ce que**
les éléments de boîtier (30), le boîtier de liaison (38) et la tôle de renforcement (50) sont des composants de tôle et sont faits en acier.

9. Boîtier de barre-bus selon l'une quelconque des revendications 1 à 8, **caractérisé en ce que**
les parties filetées (52) sont formées par galetage et que les parties filetées (52) faisant saillie sur la surface (54) de la tôle de renforcement (50) ont une hauteur qui n'excède pas la hauteur des trous de passage (56) dans la paroi latérale (40), c'est-à-dire l'épaisseur de tôle de la paroi latérale (40).
